Europäisches Patentamt

(19)  European Patent Office

Office européen des brevets

(11)  **EP 0 849 565 A2**

(12)  **EUROPEAN PATENT APPLICATION**

(43) Date of publication:
    24.06.1998  Bulletin 1998/26

(51) Int. Cl.⁶: $G01D\ 3/028$

(21) Application number: 97310307.0

(22) Date of filing: 19.12.1997

(84) Designated Contracting States:
    AT BE CH DE DK ES FI FR GB GR IE IT LI LU MC
    NL PT SE
    Designated Extension States:
    AL LT LV MK RO SI

(30) Priority: 21.12.1996 GB 9626649

(71) Applicants:
    • Bain, Rhoderick James Paton
      Glasgow G40 1PT (GB)
    • Jones, Elizabeth Ann
      Erskine PA8 7HS (GB)

    • University Court of the University of Paisley
      Paisley, Renfrewshire PA1 2BE (GB)

(72) Inventors:
    • Bain, Rhoderick James Paton
      Glasgow, G40 1PT (GB)
    • Jones, Ann Elizabeth
      Erskine, PA8 7HS (GB)

(74) Representative:
    Cooper, John et al
    Murgitroyd & Company,
    Chartered Patent Agents,
    373 Scotland Street
    Glasgow G5 8QA (GB)

(54)    **Signal processing**

(57)    A data processing method and apparatus utilising said method, employs a novel Gradiometer Transform technique of analysing data. The technique is useful in a range of fields including electrophysiology. non-destructive testing and geoscience. It is particularly applicable to the extraction of signals and other information from data subject to noise and/or background drift. The technique mimics the operation of physical gradiometer devices, but provides greater flexibility of use than physical devices of this type. The method comprises generating a plurality of components of a gradiometer transform by correlating a normalised data-set with a plurality of gradiometer step functions of differing orders. Said step functions are selected to successively eliminate components of a Taylor expansion of said data-set. The data-set may comprise sampled data and said correlation of the data-set with said step functions is performed using a modified data set in which each data sample is replaced by a piecewise continuous rectangular step function. The method may include a subsequent step of calculating a plurality of coefficients of at least one polynomial representing said data-set.

## Description

The present invention relates to signal processing methods, apparatus and systems. The invention is useful in a diverse range of fields including, but not limited to, electrophysiology, non-destructive testing (NDT) and geoscience. More particularly, the invention relates to a signal processing technique which is analogous to the operation of a physical gradiometer device, but is of wider application and does not suffer the limitations imposed by the physical structure of such devices. The technique relates especially to the extraction of signals and other information from data subject to noise and/or background drift.

Experimental data in fields as diverse as electrophysiology [1], NDT [2], geoscience etc. often comprise one or more short signal pulses superimposed on a slow moving background drift. In many of these cases the background drift is generated by a quite different source to that which produces the signal pulses, and so it is desirable to be able to separate these two distinct signal components. A variety of signal processing techniques - using, for example, Fourier [3] or Walsh [4] Transforms, or, more recently, wavelet theory [5] - have addressed this problem. However, for most such data sets it is necessary, if not crucial, that the chosen technique should preserve the position, amplitude and shape of the signal pulses, and it is well known that existing methods can fail to preserve all three of these characteristics [3,6].

By way of background to the present invention, the operation of physical gradiometer devices will now be discussed. However, it will be understood that the invention itself does not relate to physical devices of this type, but to more general data processing techniques which operate in a manner analogous to such devices.

Gradiometers are devices which detect rates of change of physical parameters, most commonly of electrical, magnetic or gravitational fields. Typically, they are required to discriminate between field components deriving from large, distant sources and smaller local sources.

For example, magnetic field gradiometers coupled to Superconducting Quantum Interference Devices (SQUIDs) are widely used for the detection of small fields from local sources in the presence of much larger fields from more distant sources. This situation arises, for example, in NDT and in biomagnetism (the study of magnetic fields from biological sources such as electrical activity in the brain). In the case of biomagnetism, field magnitudes are of the order of 0.2 pT for stimulus-invoked brain activity. Ambient noise levels vary widely depending on location and whether magnetic shielding is used, but white noise of 1 nT $Hz^{-1/2}$ with discrete frequency interference of up to 50 $\mu$T is typical. A bandwidth of at least 100 Hz is required for most medically useful measurements.

The field from magnetic sources generally decays with distance $r$ from the source as $r^{-n}$, where $1 < n < 3$, depending on the nature of the source. Typical signal sources in NDT are magnetic dipoles ($n = 3$) and those in biomagnetism are current dipoles ($n = 2$). The sources are normally external to the sensor structure. Discrimination against distant sources can be achieved by a device geometry responsive primarily to the gradient or higher spatial derivatives of the field. In practice, this is approximated by a form of spatial filtering. An $N$-th order gradiometer is an arrangement of inductive pick-up loops designed so that the first $N$ terms of a Taylor expansion of the field threading the gradiometer couple zero net magnetic flux into it.

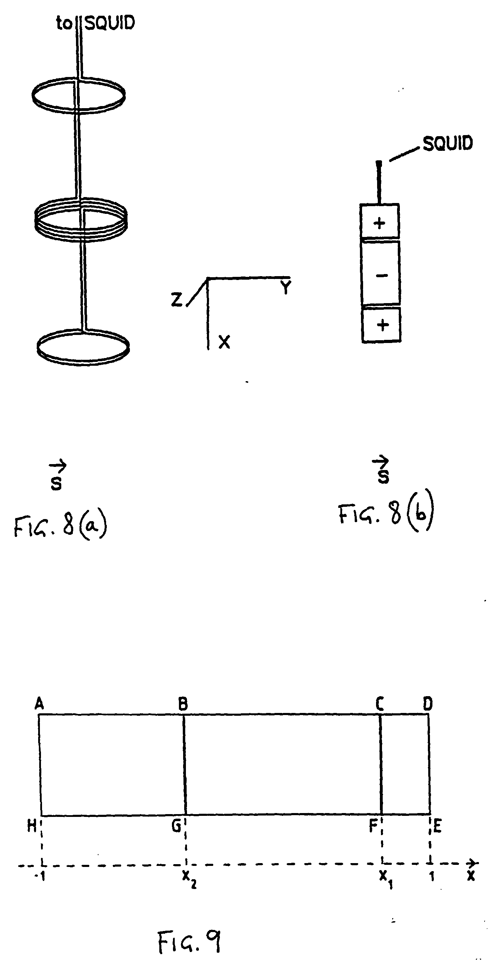

Early gradiometers, as illustrated in Fig. 8(a), were fabricated by wire wound on a machined transformer, with complex mechanisms to compensate for geometrical imperfections. In the drawing, "S" indicates a typical location of the source of the field of interest. Such devices were designed to sense field components in the $x$ (or radial) direction, for two reasons. Firstly, this component of the field has a simpler intuitive interpretation and, secondly, early simplistic models of biomagnetic sources indicated no $y$ or $z$ (tangential) components. In fact, more realistic source models and measurements using tangential field sensors show the tangential and radial field components to be comparable in magnitude. In the case of NDT all field components are significant.

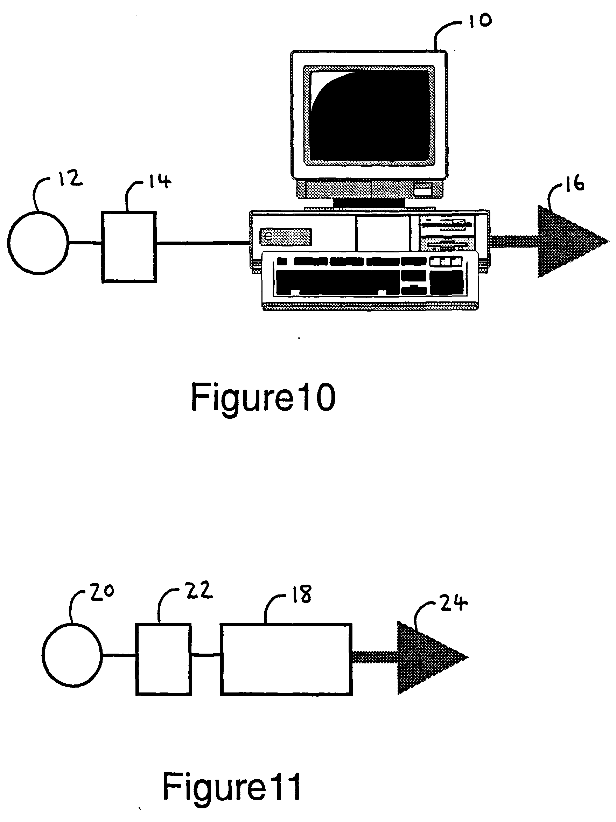

More recent planar gradiometers sense tangential $z$ components of the field and its differentials along the $x$ axis (see Fig. 8(b) and Fig. 9). They are fabricated with precise geometrical definition using photolithographic thin-film patterning in a plane, obviating the need for mechanical trimming. A simple gradiometer of this type is illustrated in Fig. 9. It consists of a series of adjacent, rectangular pick-up loops, made of super-conducting thin films, wired in series with an insulated cross-over between each pair of loops. In the example shown, insulated cross-overs exist at $x_1$ and $x_2$; thus, the only continuous current carrying path is ABGFCDEFCBGHA. The structure is fabricated with wires or thin-film metal tracks, and any electric current induced by magnetic flux is monitored. The dimensions are such that a desired signal source will normally lie in the interval $1 < x < 2$ (i.e. the source distance from the gradiometer should be comparable to the size of the gradiometer), and the source sensitivity is greatest in the plane of the gradiometer.

The positions and number of the cross-overs determine not only the gradiometer order $N$, but also the detailed response to nearby sources. In particular, the number of cross-overs $m$, where $m \geq N$, should be minimised, subject to further considerations, to minimise the gradiometer self-inductance. This, due to details of SQUID operation, maximises sensitivity. The cross-over positions are selected so as to achieve a given gradiometric order $N$ in the case where one or more cross-over positions have been pre-selected to achieve a given near-source response. This is required to give two specific properties. Firstly, it is highly desirable to locate the SQUID near the gradiometer on the same substrate, typically in the interval $-2 < x < -1$ (Fig. 9). However, the SQUID itself, as a superconductor, constitutes a nearby magnetic anomaly; i.e. it causes local distortion of the quasi-uniform interference fields and thus behaves as a local noise source. If the position of the cross-over nearest the SQUID (i.e. $x_2$ in Fig. 9) can be adjusted, a null-response to this source can be designed in. Secondly, the position of the cross-over nearest the signal source ($x_1$ in Fig. 9) can be adjusted to give a peak in gradiometer sensitivity as a function of distance at $x > 1$. This can be used either for depth-profiling (by moving the gradiometer along the $x$-axis) or for discrimination against an overlying source (e.g. detection of a nerve underlying surface muscle).

Gradiometers of this general type have the effect of filtering out low-order spatial components of the parameter being monitored, such as constant or uniformly varying background fields which would otherwise obscure a more rapidly-varying, local signal source. Theoretically, the operation of such devices would be improved by the inclusion of more "stages", corresponding to higher-order components of the parameter being monitored. However, there are practical difficulties in manufacturing such devices. Also, particular devices have to be designed for and limited to quite specific functions.

The present invention relates to a signal processing technique which, in principle, is somewhat similar to the principle of operation of physical gradiometers. For this reason, the inventors have coined the term "Gradiometer Transform" to describe the basic method which underlies the invention. The technique in accordance with the invention operates on sampled, numerical data, so that it can be extended to arbitrarily high orders, and may be applied to any type of data.

The invention embraces: a general data or signal processing method, which may be applied to stored data or to real-time or "live" signals and which may be implemented in software, firmware or hardware; apparatus incorporating means for applying the method to signals or data generated by any kind of transducer or other signal or data source; and apparatus adapted to apply the method for specific purposes.

In accordance with a first aspect of the invention, there is provided a data processing method comprising generating a plurality of components of a gradiometer transform by correlating a normalised data-set with a plurality of gradiometer step functions of differing orders.

Said step functions are preferably selected to successively eliminate components of a Taylor expansion of said data-set.

Preferably, said data-set comprises sampled data and said correlation of the data-set with said step functions is performed using a modified data set in which each data sample is replaced by a piecewise continuous rectangular step function.

The components of the gradiometer transform can be used to obtain useful information regarding the data-set, such as information regarding the background drift of a time-varying signal.

The method preferably includes a subsequent step of calculating a plurality of coefficients of at least one polynomial representing said data-set. Preferably, coefficients of a plurality of polynomials of differing orders are calculated.

Preferably, said coefficients are calculated using a table of values specific to said step functions which can be used to operate on said transform components to obtain said coefficients. Said table of values is preferably calculated in advance and stored as a look-up table for use in the execution of the method.

Preferably also, said polynomials are fitted to said data-set and the fitted polynomials are subtracted from the data-set.

It is particularly preferred that the data-set comprises a signal and the method is employed to remove background drift from said signal.

In accordance with a second aspect of the invention there is provided data processing apparatus comprising data processing means for applying the method in accordance with the first aspect of the invention to a data-set from a data source.

Preferably, said apparatus includes output means for generating an output data-set resulting from the application of said method.

In certain embodiments, the apparatus includes input means for generating an input signal in response to variations in a parameter to be monitored by the apparatus. Preferably also, the apparatus includes sampling means for dividing said signal into discrete samples.

The data-processing means may comprise a suitably programmed computer or a dedicated unit in which the method is implemented by means of a program encoded in hardware or firmware.

The data-source may be a sensor for monitoring a physical parameter or a store of previously obtained or synthesised data.

The underlying theory, examples and embodiments of the invention will now be described, by way of example only, with reference to the accompanying Tables and drawings in which:

Table I shows the first fifteen rows and columns of the generic matrix $\mathbf{J^{-1}}$.

Table II shows the locations of the maxima and minima of the function illustrated in Fig.4(a) compared with the locations of the maxima/minima of the gradiometer transform fits to the data given in Figs.4(b)-(d).

Figure 1 illustrates the first six gradiometer step functions. The step function $h_m(t)$ has crossovers at $t_s = \cos(s\pi/(m+1))$, $s=1,2,...,m$.

Figure 2 illustrates: (a) the background drift $d(t) = 5-3(t+1)e^{-2t}$; (b) the pulse signal; and (c) the test function comprising the sum of the pulse signal in (b) and the drift in (a); and (d)-(f): the gradiometer transform components $F_m$ for each of the functions in (a),(b),(c).

Figure 3 illustrates: (a) the test function $f(t)$; (b)-(g) the function $f(t)$ after using Gradiometer differencing to remove $0^{th}$, $1^{st}$, $2^{nd}$, $3^{rd}$, $4^{th}$ and $5^{th}$ order polynomials; and (h) the original signal pulses after subtraction of their mean value over [-1,1]. As Gradiometer differencing will always return functions whose mean value is zero, the mean has been removed from the pulses to aid comparison.

Figure 4. illustrates random noise (in the form $a$ rand(rand-0.5) where rand is a random number between 0 and 1) added to the signal in (a); (b)-(d) show the generated data ($a$=0.5,1,2 respectively); and (e)-(g) show the reconstructed signal obtained by applying the Gradiometer Transform to the generated data.

Figure 5. illustrates: (a) a foetal magnetocardiogram in which magnetic field density B (arbitrary units) is plotted against time $t$ (scaled so that $-1 \leq t \leq t1$); (b) the gradiometer transform components $F_m$ of the signal in (a); and (c) the same data after $30^{th}$ order gradiometer differencing.

Figure 6 illustrates: (a) a somatosensory evoked field (100 averages) in which magnetic field density is plotted against time $t$ (scaled so that $-1 \leq t \leq 1$); (b) the gradiometer transform components $F_m$ of the signal in (a); and (c) the $50^{th}$ order fit to the data in (a) which is produced by the gradiometer transform.

Figure 7 illustrates: (a) a magnetic profile over a steel tube in which magnetic field density B is plotted against displacement $s$ (scaled so that $-1 \leq s \leq 1$); (b) gradiometer transform components $F_m$ of the signal in (a); and (c)&(d) the signal after gradiometer filtering (see text for details).

Figures 8(a) and 8(b) illustrate gradiometer geometries of a conventional wirewound axial field sensor and a planar tangential field sensor, respectively, by way of background information to the present invention.

Figure 9 shows an example of planar gradiometer geometry, by way of background information to the present invention.

Fig. 10 illustrates a typical implementation of the invention using a general purpose computer.

Fig. 11 illustrates a typical implementation of the invention in a dedicated hardware unit.

The recently developed technique of Gradiometer filtering [7] (discussed in greater detail above) has been used to successfully separate signals of the type described into two separate components, namely the signal pulses and the background drift, while maintaining the position, amplitude and shape of the signal waveform. Briefly, the Gradiometer Transform of the present invention works by firstly providing an estimate of the order of drift present and secondly enabling a polynomial function of arbitrary order to be rapidly and accurately fitted to the experimental data. As the background drift can in general be represented by a low order polynomial, while rapidly varying underlying signals cannot, a differencing or filtering method can be used to separate the two signal components. In Gradiometer differencing, a polynomial of sufficiently low order to represent the drift alone is fitted to, and then subtracted from, the signal; in Gradiometer filtering such a low order polynomial is subtracted from a high order polynomial fit which captures the complete signal - the advantage of filtering is that it will simultaneously eliminate noise. The present invention is based on a novel underlying theory of Gradiometer Transforms, which will facilitate rapid and accurate computation of both the transform components and the regenerated signal, together with an evaluation of its performance using both synthesised and collected data.

The key definitions of the Gradiometer Transform are as follow.

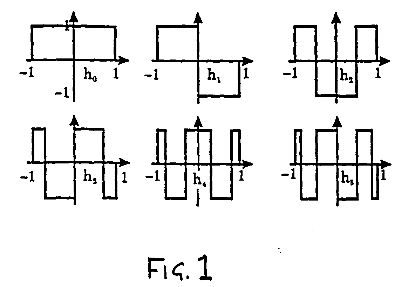

In the present example, an $m^{th}$ order gradiometer step function takes values ±1 over the interval [-1,1], with crossovers at $t_s = \cos(s\pi/(m+1))$, $s = 1,2,...,m$; the first eight of these step functions are shown in Fig.1. The component $F_m$ ($m = 0,1,2,...$) of the Gradiometer Transform is found by correlating a given signal $f(t)$, or other data-set, (scaled, or "normalised", so that $-1 \leq t \leq 1$) with the $m^{th}$ order gradiometer step function $h_m(t)$:

$$F_m = \int_{-1}^{1} f(t)\, h_m(t)\, dt. \tag{1}$$

Evaluating $N$ of these transform components generates a transform vector

$$
\underline{F} = \begin{bmatrix} F_0 \\ F_1 \\ \cdot \\ \cdot \\ \cdot \\ F_{N-1} \end{bmatrix} , \tag{2}
$$

which can be used to obtain an $(N\text{-}1)^{th}$ order polynomial fit to the signal, namely $f(t) \simeq c_0 + c_1 t + ... + c_{N-1} t^{N-1}$ [9]. The vector of coefficients $\underline{c} = [c_0 \, c_1 \, ... \, c_{N-1}]^T$ is obtained from the transform vector $\underline{F}$ using the matrix equation

$$
\underline{c} = \begin{bmatrix} c_0 \\ c_1 \\ \cdot \\ \cdot \\ \cdot \\ c_{N-1} \end{bmatrix} = \mathbf{J}^{-1} \, \underline{F} \tag{3}
$$

where $\mathbf{J}^{-1}$ is the inverse of an $N \times N$ matrix $\mathbf{J} = [J_{m,n}]$ whose elements are given by

$$
J_{m,n} = \int_{-1}^{1} t^{n-1} h_{m-1}(t) \, dt . \tag{4}
$$

(see [7]).

The Matrices J and $J^{-1}$ will now be described.

Here it is shown that the matrix **J** can be decomposed into the product of four matrices, three of which have well defined inverses and the fourth of which, being a sparse matrix whose entries are 0 and 1, has an inverse which can be easily calculated. Decomposing the matrix **J** in this way eliminates the error which can occur in using (4) to calculate the matrix elements numerically, and also the resulting error (naturally compounded) in calculating the inverse matrix $\mathbf{J}^{-1}$. As in previous work with gradiometer step functions [8], it is convenient initially to consider separately those cases where the gradiometer step function has an even or an odd number of crossovers.

When $m$ is even, the gradiometer step function $h_{m-1}(t)$ will have an odd number of crossovers, located at $t = \cos(s\pi/m)$, $s = 1,2,...,m\text{-}1$. It follows from the (4) above that the element in the $m^{th}$ row and $n^{th}$ column of the matrix $J$ is given by

$$
J_{m,n} = \frac{1}{n}\left[ -(-1)^n - 1 + 2 \sum_{k=1}^{m/2} \cos \frac{n(2k\text{-}1)\pi}{m} - 2 \sum_{k=1}^{m/2-1} \cos \frac{n2k\pi}{m} \right]
$$

If we now expand the powers of $\cos x$ in terms of cosines of multiple angles

$$
\cos^n x = \sum_{r=0}^{n} b_{r,n} \cos rx \tag{5}
$$

and use the identities

$$\sum_{r=0}^{n} b_{r,n} = 1 \text{ and } \sum_{r=0}^{n} b_{r,n} (-1)^{r} = (-1)^{n} \tag{6}$$

(obtained by substituting $x=0$ and $x=\pi$ respectively in the above), then

$$J_{m,n} = \frac{1}{n} \left[ -\sum_{r=0}^{n} b_{r,n} (-1)^{r} - \sum_{r=0}^{n} b_{r,n} + 2 \sum_{k=1}^{m/2} \sum_{r=0}^{n} b_{r,n} \cos\frac{(2k-1)\pi r}{m} - 2 \sum_{k=1}^{m/2-1} \sum_{r=0}^{n} b_{r,n} \cos\frac{2k\pi r}{m} \right]$$

or

$$J_{m,n} = \frac{1}{n} \sum_{r=0}^{n} b_{r,n} \left[ 2 \sum_{k=1}^{m/2} \cos\frac{(2k-1)\pi r}{m} - 2 \sum_{k=1}^{m/2-1} \cos\frac{2k\pi r}{m} - 1 - (-1)^{r} \right] \cdot \mathbf{(7)}$$

While the values of $b_{r,n}$, the coefficients of $\cos rx$ in the expansion of $\cos^{n}x$, are well documented [9], their precise values are not required here. Following Jones & Bain [8], we note that as $m$ is even, the roots of the equation

$$z^{m} + 1 = 0 \tag{8}$$

are

$$z = \cos\frac{(2k-1)\pi}{m} \pm i \sin\frac{(2k-1)\pi}{m} \ (k = 1,2,...,\frac{m}{2}),$$

and the roots of the equation

$$z^{m} - 1 = 0 \tag{9}$$

are

$$z = \pm 1 \text{ and } z = \cos\frac{2k\pi}{m} \pm i \sin\frac{2k\pi}{m} \ (k = 1,2,...,\frac{m}{2}-1),$$

from which it follows that the sum of the $r^{th}$ powers of the roots of (8), $S_{m,r}$, is

$$S_{m,r} = 2 \sum_{r=1}^{m/2} \cos\frac{(2k-1)\pi r}{m} ,$$

and the sum of the $r^{th}$ powers of the roots of (9), $T_{m,r}$, is

$$T_{m,r} = 1 + (-1)^{r} + 2 \sum_{r=1}^{m/2-1} \cos\frac{2k\pi r}{m} .$$

It follows from Eq.(7) that $J_{m,n}$ may be written as

6

$$J_{m,n} = \frac{1}{n}\sum_{r=0}^{n} b_{r,n}[S_{m,r} - T_{m,r}] \ . \tag{10}$$

When $m$ is odd, the gradiometer step function $h_{m-1}(t)$ has an even number of crossovers, located at $t = \cos(s\pi/m)$, $s = 1,2,...,m-1$, and the element $J_{m,n}$ is given by

$$J_{m,n} = \frac{1}{n}\left[-(-1)^{n} + 1 - 2 \sum_{k=1}^{(m-1)/2} \cos\frac{n(2k-1)\pi}{m} + 2 \sum_{k=1}^{(m-1)/2} \cos\frac{n2k\pi}{m}\right]$$

which, using the identities (5) and (6), may be written as

$$J_{m,n} = \frac{1}{n}\sum_{r=0}^{n} b_{r,n}\left[-2 \sum_{k=1}^{(m-1)/2} \cos\frac{(2k-1)\pi r}{m} + 2 \sum_{k=1}^{(m-1)/2} \cos\frac{2k\pi r}{m} + 1 - (-1)^{r}\right].$$

When $m$ is odd, the $m$ roots of Eq.(8) are

$$z = -1, \ z = \cos\frac{(2k-1)\pi}{m} \pm i \sin\frac{(2k-1)\pi}{m} \ (k = 1,2,...,\frac{m-1}{2}) \ ,$$

and the $m$ roots of Eq.(9) are

$$z = +1 \ \text{and} \ z = \cos\frac{2k\pi}{m} \pm i \sin\frac{2k\pi}{m} \ (k = 1,2,...,\frac{m-1}{2}) \ .$$

In this case, the sums of the $r^{th}$ powers of the roots of Eqs.(8) and (9) are given by

$$S_{m,r} = (-1)^{r} + 2 \sum_{k=1}^{m-1)/2} \cos\frac{(2k-1)\pi r}{m} \ \text{and} \ T_{m,r} = 1 + 2 \sum_{k=1}^{(m-1)/2} \cos\frac{2k\pi r}{m} \ ,$$

respectively, so that $J_{m,n}$ may be written as

$$J_{m,n} = \frac{1}{n}\sum_{r=0}^{n} b_{r,n}[T_{m,r} - S_{m,r}]. \tag{11}$$

It follows from Eqs.(10) and (11) that in all cases, the element $J_{m,n}$ of the matrix $\boldsymbol{J}$ is

$$J_{m,n} = \frac{(-1)^{m}}{n}\sum_{r=0}^{n} b_{r,n}\delta_{m,r} \tag{12}$$

where

$$\delta_{m,r} = S_{m,r} - T_{m,r} \ , \tag{13}$$

and $S_{m,n}$ and $T_{m,r}$ are the sums of the $r^{th}$ powers of the roots of Eqs.(8) and (9) respectively. Newton's Formulae [8,10] state that the sums $S_r$ of the $r^{th}$ powers of the roots of the polynomial equation

$$z^n + a_1 z^{n-1} + a_2 z^{n-1} + \ldots + a_{n-1} z + a_n = 0$$

satisfy the relationships

$$
\begin{aligned}
S_1 + a_1 &= 0 \\
S_2 + a_1 S_1 + 2S_2 &= 0 \\
S_3 + a_1 S_2 + a_2 S_1 + 3a_3 &= 0 \\
&\ldots \\
S_n + a_1 S_{n-1} + \ldots + a_{n-1} S_1 + na_n &= 0
\end{aligned}
$$

and $\quad S_{n+k} + a_1 S_{n+k-1} + \ldots + a_{n-1} S_{k+1} + a_n S_k = 0 \;\; \forall \; k \geq 1.$

Using these relationships, it can be seen that $S_{m,r}$ the sum of the $r^{th}$ powers of the roots of $z^{m+1} = 0$, is given by

$$
S_{m,r} = \begin{cases}
-m & \text{if } r/m = 1,3,5,\ldots \\
m & \text{if } r/m = 2,4,6,\ldots \\
0 & \text{otherwise,}
\end{cases}
$$

and the sum $T_{m,r}$ of the $r^{th}$ powers of the roots of $z^m - 1 = 0$ is

$$
T_{m,r} = \begin{cases}
m & \text{if } r/m = 1,2,3,\ldots \\
0 & \text{otherwise },
\end{cases}
$$

so that $\delta_{m,r}$ is given by

$$
\delta_{m,r} = \begin{cases}
-2m & \text{if } r/m = 1,3,5,\ldots \\
0 & \text{otherwise}
\end{cases} \qquad (14)
$$

We note that $b_{r,n}$ - defined as the coefficient of $\cos rx$ in the expansion of $\cos^n x$ - will be zero whenever $r > n$, and furthermore as $\delta_{m,0} = 0 \;\forall\; m$, we may without prejudice alter the limits of summation in Equ.(12) to run from $r = 1$ to $r = N$ ($n \leq N$):-

$$
J_{m,n} = \frac{(-1)^m}{n} \sum_{r=1}^{\frac{N}{2}} b_{r,n} \delta_{m,r},
$$

which may be written in matrix form as

$$J_{m,n} = \frac{(-1)^m}{n}\begin{bmatrix}\delta_{m,1} & \delta_{m,2} & \delta_{m,3} & \cdots & \delta_{m,N}\end{bmatrix}\begin{bmatrix}b_{1,n}\\b_{2,n}\\b_{3,n}\\ \cdot \\ \cdot \\ \cdot \\b_{N,n}\end{bmatrix}.$$

It is now clear that the matrix **J** may be written as or

$$\mathbf{J} = \mathbf{D}_1 \, \Delta \, \mathbf{B} \, \mathbf{D}_2 \qquad\qquad (15)$$

$$\mathbf{J} = \begin{bmatrix}-1 & 0 & . & . & 0\\ 0 & 1 & . & . & 0\\ . & . & . & . & .\\ . & . & . & . & .\\ 0 & 0 & . & . & (-1)^N\end{bmatrix}\begin{bmatrix}\delta_{1,1} & \delta_{1,2} & . & . & \delta_{1,N}\\ \delta_{2,1} & \delta_{2,2} & . & . & \delta_{2,N}\\ . & . & . & . & .\\ . & . & . & . & .\\ \delta_{N,1} & \delta_{N,2} & . & . & \delta_{N,N}\end{bmatrix}\begin{bmatrix}b_{1,1} & b_{1,2} & . & . & b_{1,N}\\ b_{2,1} & b_{2,2} & . & . & b_{2,N}\\ . & . & . & . & .\\ . & . & . & . & .\\ b_{N,1} & b_{N,2} & . & . & b_{N,N}\end{bmatrix}\begin{bmatrix}1 & 0 & . & . & 0\\ 0 & 1/2 & . & . & 0\\ . & . & . & . & .\\ . & . & . & . & .\\ 0 & 0 & . & . & 1/N\end{bmatrix}$$

or

$$\mathbf{J} = \mathbf{D}_1 \, \Delta \, \mathbf{B} \, \mathbf{D}_2 \qquad\qquad (15)$$

where $\mathbf{D}_1$ and $\mathbf{D}_2$ are the diagonal matrices $\mathbf{D}_1 = \mathrm{diag}[-1,1,-1,1,...,(-1)^N]$ and $\mathbf{D}_2 = \mathrm{diag}[1,\frac{1}{2},\frac{1}{3},\frac{1}{4},...,^1/_N]$, $\Delta$ is the matrix

$$\Delta = [\delta_{i,j}]$$

and **B** is the matrix

$$\mathbf{B} = [b_{i,j}].$$

Using Equ.(13), the matrix $\Delta$ can be written in the form

$$\Delta = diag[-2,-4-6,...,-2N]\Delta_s \qquad\qquad (16)$$

where

$$\Delta_s = \begin{bmatrix}1 & 0 & 1 & 0 & 1 & 0 & 1 & 0 & 1 & 0 & 1 & . & . & .\\ 0 & 1 & 0 & 0 & 0 & 1 & 0 & 0 & 0 & 1 & 0 & . & . & .\\ 0 & 0 & 1 & 0 & 0 & 0 & 0 & 0 & 1 & 0 & 0 & . & . & .\\ & & & . & . & . & . & . & & & & & & \end{bmatrix} \qquad\qquad (17)$$

is a sparse matrix such that the elements in the $m^{th}$ row are 1 in those columns whose column number is an odd multiple of $m$, and zero otherwise. By combining Eqs.(15) and (16) we obtain

$$\mathbf{J} = \mathbf{D}_3 \, \boldsymbol{\Delta}_s \, \mathbf{B} \, \mathbf{D}_2 \qquad\qquad (18)$$

where $\mathbf{D}_3 = \mathrm{diag}[2,-4,6,-8,...,2(-1)^{N-1}N]$.

It follows from Equ.(18) that the inverse matrix $\mathbf{J}^{-1}$ is given by

$$\mathbf{J}^{-1} = \mathbf{D}_2^{-1} \, \mathbf{B}^{-1} \boldsymbol{\Delta}_s^{-1} \, \mathbf{D}_3^{-1} \qquad\qquad (19)$$

Calculating $\mathbf{D}_2^{-1}$ and $\mathbf{D}_3^{-1}$ is trivial : $\mathbf{D}_2^{-1} = \mathrm{diag}[1,2,3,4,...,N]$ and $\mathbf{D}_3^{-1} = \mathrm{diag}[1/2,-1/4,1/6,-1/8,...,$ $(-1)^{N-1}/2N]$. As stated above, the elements of $\mathbf{B}$ are simply the coefficients of $\cos rx$ in the expansion of $\cos^n x$. It is easy to show that the elements of the inverse matrix $\mathbf{B}^{-1}$ are the coefficients of $\cos^r x$ in the expansion of $\cos nx$ - that is, these elements are the coefficients of the Chebyshev polynomials of the first kind, which are well documented [11]. The element in the $i^{th}$ row and $j^{th}$ column of $\mathbf{B}^{-1}$, $t_{i,j}$, is the coefficient of $\cos^j x$ in the expansion of $\cos ix$, and is given by

$$t_{i,j} = \frac{2^{i-1} j (-1)^{j-i/2} \left(\frac{i+j}{2} - 1\right)!}{\left(\frac{j-i}{2}\right)! \, i!}$$

when $i \leqslant j$ and $i$ and $j$ are *either both even or both odd*, and zero otherwise.

While the inverse matrix $\boldsymbol{\Delta}_s^{-1}$ is not so easily obtained, we do note that as the elements of $\boldsymbol{\Delta}_s$ are all either 0 or 1, the inverse may be easily calculated. Further, as $\boldsymbol{\Delta}_s^{-1}$ will be an upper triangular matrix, all of whose entries are integers, any numerical inaccuracy in the calculation of the inverse matrix will rapidly become apparent. In summary, we may write the inverse matrix $\mathbf{J}^{-1}$ in the form

$$\mathbf{J}^{-1} = \mathrm{diag}[1,2,3,...,N] \; \mathbf{T} \; \boldsymbol{\Delta}_s^{-1} \; \mathrm{diag}[1/2,-1/4,1/6,...,(-1)^N/2N] \; ,$$

where

$$\mathbf{T} = [t_{i,j}] = \mathbf{B}^{-1}$$

and $\boldsymbol{\Delta}_s^{-1}$ is the inverse of the matrix given in (17). As all four of the above matrices are rational and upper triangular, it is clear that the matrix $\mathbf{J}^{-1}$ is also a rational, upper triangular matrix.

We now state the main property of the matrix $\mathbf{J}^{-1}$. So far, we have considered the inverse of the finite $N \times N$ matrix $\mathbf{J}$ defined by (4). While the order of the matrix $N$ will in all practical cases be finite, it may, nevertheless be arbitrarily large (and there is no reason why the theory may not be extended to the case where $\mathbf{J}$ and $\mathbf{J}^{-1}$ are infinite matrices). Because $\mathbf{J}$ is an upper triangular matrix, the submatrix $\mathbf{J}_n$ which consists of the first $n$ rows and columns of $\mathbf{J}$ will have an inverse which is the corresponding submatrix - the first $n$ rows and columns - of $\mathbf{J}^{-1}$. This property means that calculating $\mathbf{J}^{-1}$ need only be done once, provided of course that it is done for a sufficiently large matrix. All lower orders of the Gradiometer transform can then be dealt with by reading the appropriate submatrix from a 'look-up' table. We provide, in Table I, the first 15 rows and columns of the matrix $\mathbf{J}^{-1}$.

Examples will now be described of the uses of the Gradiometer Transform.

To evaluate the ability of the Gradiometer transform to extract signal pulses from a slow moving background drift, we consider a known function $f(t)$ which is both piecewise continuous and integrable over the interval $[-1,1]$. As such, the transform components may be evaluated directly using (1), in which case the component $F_m$ is given by

$$F_m = (-1)^m F(1) - 2 \sum_{k=1}^{m} (-1)^{m+k} F\left(\cos \frac{k\pi}{m+1}\right), \quad m = 0,1,2,...$$

where

$$F(t) = \int_{-1}^{t} f(t')\, dt'.$$

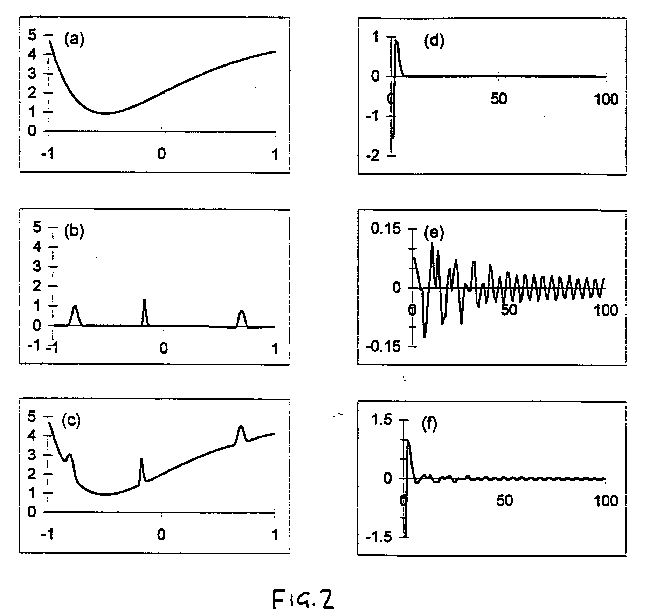

The function we have selected is the sum of a background drift and a signal containing three distinct pulses and is shown, along with the corresponding transform components in Fig.2. As expected [7] only the very low order transform components of the drift are significant - implying that the drift can be well approximated by a low order polynomial, whereas the presence of non-zero components over the whole range shows that the signal pulses cannot be successfully fitted by a polynomial of order less that 100.

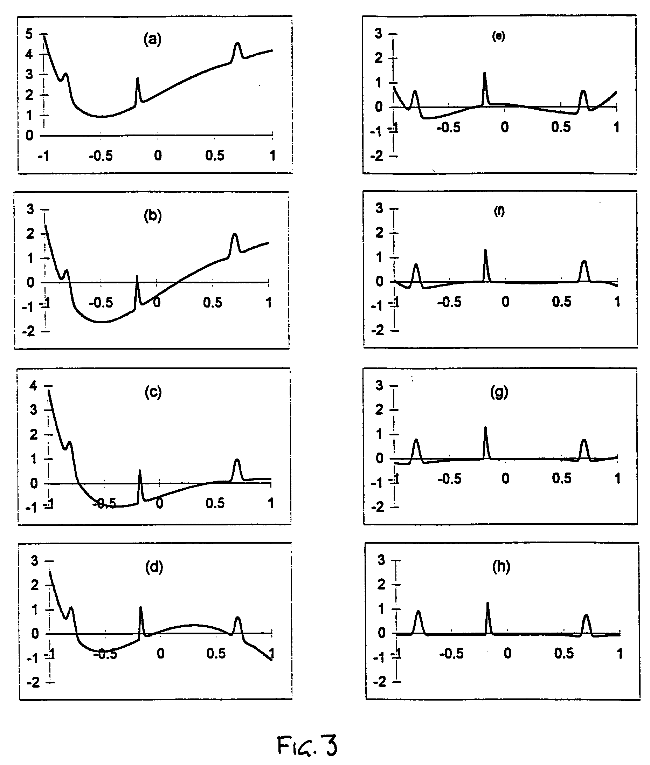

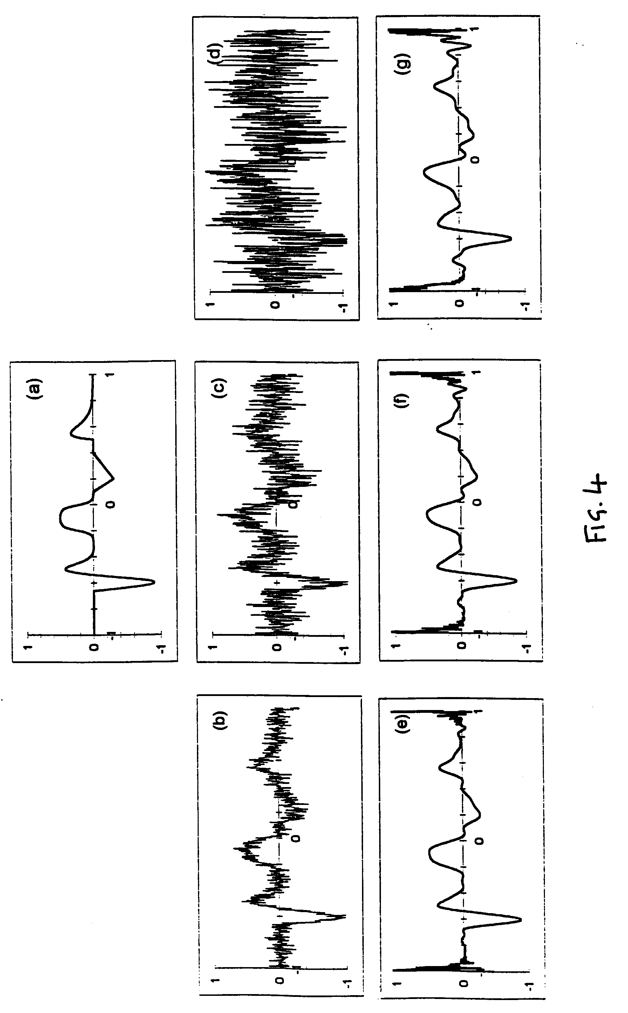

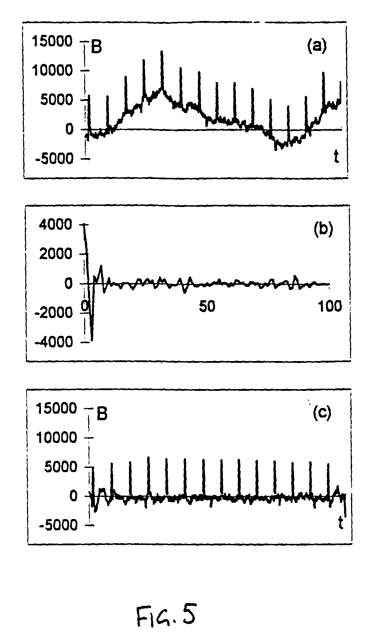

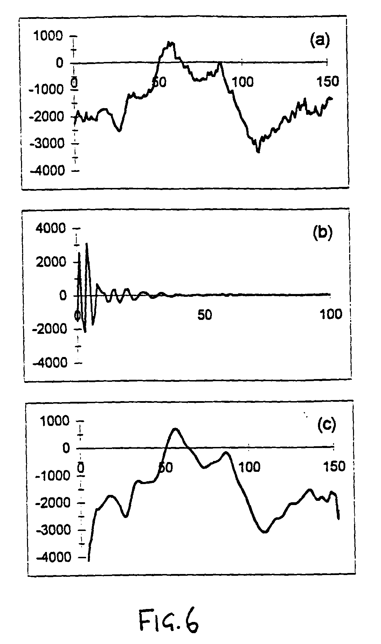

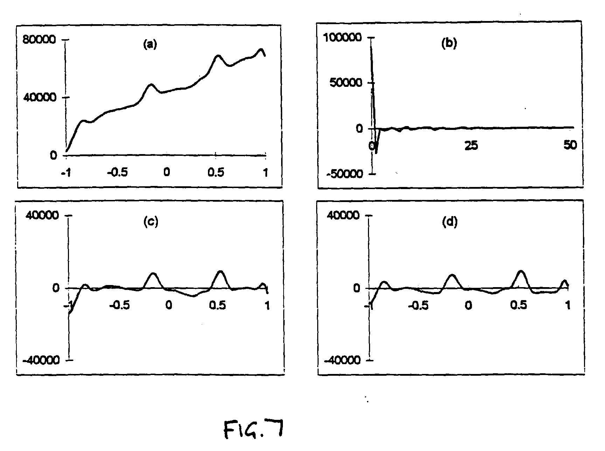

In Fig.3 we illustrate the effect of removing successively higher order fitted polynomials from our chosen function. In each case the coefficients of a fitted polynomial are obtained from (3) using the transform vector of the **combined** signal $f(t)$, which is then simply subtracted from $f(t)$. It is apparent that this method of Gradiometer differencing rapidly and effectively eliminates the background drift while leaving each of the signal pulses intact.

In almost all practical applications the signal of interest will consist of sampled data, in which case the transform coefficients are obtained as follows. For sampled data given by

$$\{ (t_i, f_i) : i = 1,2,...,N \} ,$$

scaled in such a way that $-1 < t_1 < t_2 < ... < t_N < 1$, we replace the discrete sample with a piecewise continuous rectangular step function given by

$$f_{rect}(t) = f_i , \; s_{i-1} \leq t < s_i \; (i = 1,2,...,N)$$

where $s_i = \frac{1}{2}(t_i + t_{i+1}) \; (i = 1,2,...,N\text{-}1)$
and $s_0 = -1, s_N = 1$;
we note the data need **not** be equispaced. The transform component $F_m$ of the sampled data is obtained by replacing $f(t)$ in (1) with $f_{rect}(t)$. Correlating $f_{rect}(t)$ with the $m^{th}$ order gradiometer step function is computationally efficient as it involves simply a change of sign in $f_{rect}$ at the appropriate gradiometer crossover positions and summing the signed areas of the resulting step function. We provide, in an Appendix, algorithms for calculating $F_m$ for sampled data.

To demonstrate the ability of the Gradiometer Transform to extract signal pulses from noisy data we have sampled a known function - chosen to mimic a variety of typical signal pulses - and added noise. In Fig.4 we illustrate signals at three different noise levels along with the result of using the Gradiometer Transform to fit a $50^{th}$ order polynomial to the generated data. Table II gives the true and estimated location of each of the signal peaks marked. It is clear that the reconstructed signals retain both the features and the locations of the original signal pulses, even at moderately high noise levels.

To explore the effectiveness of using the Gradiometer Transform to eliminate noise and/or background drift in experimental data, we have chosen data from the fields of biomagnetism and non-destructive testing. In Fig.5a we show a typical foetal magnetocardiogram [12]. The rapidly varying waveforms in the signal are due to magnetic fields associated with electrical activity in the foetal heart; these are superimposed on a slow moving quasi-periodic drift which is mainly induced by maternal respiration. Because the interval between successive pulses is not strictly periodic, it contains diagnostic information (as do, to a lesser extent, the amplitude and shape of the pulses) [1,12], and so such information must be preserved by any signal processing technique. Calculating the transform components of this signal (Fig.5b) shows an abundance of both low and high order components. While the presence of high order components indicates that high order polynomial fitting is inappropriate here (as may be apparent from the original signal), the dominance of lower order components suggests that low order differencing may be applied in order to eliminate the background drift. Fig.5c shows the effect of removing a $30^{th}$ order polynomial from the data; the foetal heartbeat is now clearly visible. The resultant signal is now suitable for standard cardiographic analysis.

In Fig.6a we show the magnetic activity induced at one point on the human skull in response to a nerve stimulus applied to the wrist at time $t=0$. It is diagnostically important to obtain accurate estimates of the location of the maxima and minima which occur *approximately* 20ms, 30ms, 60ms and 120ms after the application of the stimulus [1]. While these signal peaks are often visible, determining their exact location is hampered by the noisy nature of the signal and by the possible presence of an underlying magnetic drift, and it is well known that these locations are normally estimated by eye with concomitant experimental bias. It is clearly desirable to quantify this process. Using the Gradiometer Transform we can obtain a polynomial fit to the data in which case the positions of the maxima/minima can be easily determined. In Fig.6b we show the transform components of the signal in 6a; while it is clear that the data may be fitted by a polynomial of order $\sim x^{50}$, the components also show that there is no significant underlying drift to be eliminated here. In Fig.6c we illustrate the 50$^{th}$ order polynomial fit to the data obtained by using the Gradiometer Transform. A simple Newton-Raphson may be used to obtain the roots of the derivative of this polynomial which will give the location of the peaks in question - in this case the peaks are located at 27.0ms, 33.0ms, 59.1ms and 109.5ms respectively.

Our third data set comes from the field of non-destructive testing. Fig.7a shows the magnetic profile over a steel tube [13]. Each of the pulses corresponds to a defect in the tube, and here it is clear that the signal contains a background magnetic drift (generally present in experimental situations). As the amplitude and shape of each pulse contains information on the shape (i.e. depth and width) of the defect, while the position of the pulse determines its location, it is clear that all three characteristics should be preserved in extracting the pulses from the signal. The Gradiometer transform components of these data are shown in Fig.7b; the dominance of the first two components reflects the clear linear trend in the data. Although not immediately apparent, the data are noisy; the effective absence of high order transform components ($|F_m/F_0|<0.0012 \ \forall \ m \geq 40$) shows that in this case it is appropriate to fit a high order polynomial to the data. Figs.7c,d show the result of fitting a 40$^{th}$ order polynomial to the data and filtering, respectively, linear and 6$^{th}$ order polynomials; the defects are now clearly visible and as such are amenable to standard analysis.

We have presented in detail the underlying theory of the Gradiometer Transform - a new transform designed to extract signal pulses from data subject to noise and background drift. While calculating the transform components of any given signal (the forward transform) is straightforward, using these to obtain the coefficients of a fitting polynomial (the back-transform) requires knowledge of the generic matrix $\mathbf{J}^{-1}$. We have presented the underlying theory which allows this matrix to be broken down in such a way that it may be easily and accurately computed, and furthermore shown that its elements are *independent* of the data set under consideration.

The Gradiometer Transform may be used in a variety of ways to aid signal extraction. Although designed primarily as a tool for extracting pulse signals from background drift [7], the Gradiometer Transform has proved surprisingly effective at extracting signal pulses, by high order polynomial fitting, from noisy data in which there is no drift, while preserving both the general shape and location of the pulses. The transform may also be used simply to eliminate underlying background drift by removing a low order polynomial fit from the original data. In both these cases the Gradiometer Transform will be $\sim$ 95% computationally more efficient than standard polynomial fitting techniques [7]. We have shown that the Gradiometer Transform is even more efficient when used to *simultaneously* fit a polynomial to data *and* remove background drift, as this can be done by filtering in transform space.

The transform components themselves contain useful information about data under consideration, in that these components can be used to indicate the order of fitting and/or filtering that can be reasonably applied, although we note that in all the cases considered here, the precise order of fit or filter is non-critical. We have shown, using data from the fields of biomagnetism and non-destructive testing, hoe the transform components and back-transform may be used to effectively extract the desired signal.

The signal processing method described herein and referred to as the Gradiometer Transform may be applied for practical purposes in a variety of ways, all of which are embraced by the present invention, including the following.

The method may be implemented as a software program running on a general purpose computer. Such a program may operate on "live" or stored data from any applicable source, such as a sensor. An example of this is illustrated in Figure 10, which shows a computer 10, such as a personal computer (PC), for running a program to perform the Gradiometer Transform, connected to a data source 12, which may be a sensor adapted to generate a signal in response to variations in a physical parameter of interest or a source of stored data.

Where the data source 12 is a sensor or the like which outputs an analogue signal, or an analogue data store, then the complete signal processing unit will include analogue to digital converter (ADC) means 14 for sampling the analogue signal or data prior to processing by the computer 10. It will be understood that the ADC means might comprise a separate unit connected between the data source 12 and the computer 10, as illustrated, or may be incorporated into either the data source 12 or the computer 10.

It will also be understood that, where the data source comprises a store of digital data, this store might be external to the computer 10 or may comprise the computer's own data store (typically the hard disk of the computer). The digital data may originate from any applicable source and may be transferred to the data store by any suitable means.

The computer 10 may be adapted to generate an external output 16 from the Gradiometer Transform program which may be employed for any required purpose.

Alternatively, the method may be implemented by a program stored in hardware or firmware in a dedicated data processing unit 16, as is illustrated schematically in Figure 11. Again, the program operates on "live" or stored data from an internal or external data source 20 (sensor, data store or the like, as above), the complete system including ADC means 22 as required. The data processing unit 18 generates an output 24 which may be employed for any required purpose.

Where the system is intended for a specific purpose, then the components of the system may be integrated into a single a single unit comprising, for example, a sensor, ADC means and data processing means. A general purpose unit might comprise the data processing means alone or the ADC and data processing means, with provision for connection to other components as required.

In any of the cases mentioned above, the program implementing the Gradiometer Transform, and other system components, may be dedicated to a particular application or may be user-configurable to suit specific requirements.

The detailed design of software, firmware and hardware components of data processing systems to implement the Gradiometer Transform, as discussed above, is a matter of routine engineering and will vary widely according to the requirements of particular applications. Accordingly, these aspects are not described in detail herein.

Improvements and modifications may be incorporated without departing from the scope of the invention.

## APPENDIX

To obtain the transform coefficients of the sampled data $\{(t_i, f_i) : i = 1, 2, \ldots, N\}$ (where $-1 < t_1 < t_2 < \ldots < t_N < 1$), we begin by calculating the values $s_i = \frac{1}{2}(t_i + t_{i+1})$, $i = 1, \ldots, N-1$ at the right-hand end of each

rectangle of the step function $f_{rect}(t)$, and the areas $A_i$ = $f_i$ $(s_i - s_{i-1})$, $i=1,\ldots,N$ of these rectangles. The following PASCAL algorithm may be used to calculate the values of each of the transform components $F_m$. (The arrays s[I], A[I], and f[I] are used to store the $s_i$ ($i=0,\ldots,N$), $A_i$ ($i=1,\ldots,N$) and $f_i$ ($i=1,\ldots,N$) respectively).

```
I:=0;  Fm:=0;
FOR p := 1 TO m+1 DO
    BEGIN xover:= cos((1-p/(m+1))*pi);
            WHILE (s[I]<xover) AND (I<N) DO
            BEGIN I := I+1;
                    IF odd(p)  THEN Fm:=Fm+A[I]
                                    ELSE Fm:=Fm-A[I];
            END;
            IF odd(p)  THEN Fm:=Fm-2*f[I]*(s[I]-xover)
                            ELSE Fm:=Fm+2*f[I]*(s[I]-xover);
            END;
```

In the above, computational effort has been reduced by continuing to sum the signed areas $A_i$ until a crossover position falls within the most recently summed area, at which point twice the area lying between the crossover and the right-hand end of the rectangle is subtracted from the sum. For multiple implementations of the Gradiometer Transform we note that computational effort may be further reduced by storing the values of the crossover positions $\cos((1-s/(m+1))\pi)$ in a look-up table.

When the data are **equispaced** on the interval $(-1,1)$, it is not necessary to calculate each of the areas $A_i$. It is sufficient instead to calculate the spacing $d = 2/N$ between successive $t$-values, in which case the algorithm above can be modified as follows :-

```
I:=0;  sum:=0;
```

```
FOR p := 1 TO m+1 DO
    BEGIN xover:= cos((1-p/(m+1))*pi);
            WHILE (s[I]<xover) AND (I<N) DO
            BEGIN I := I+1;
              IF odd(p) THEN sum:=sum+f[I]
                    ELSE sum:=sum-f[I];
            END;
            IF odd(p) THEN sum:=sum-N*f[I]*(s[I]-
xover)
                    ELSE sum:=sum+N*f[I]*(s[I]-xover);
            END;
            Fm := sum*d;
```

The total number of multiplications (and divisions) required to obtain the coefficients $c_0, c_1, \ldots, c_M$ of an $M^{\text{th}}$ order polynomial fit to $N$ data values which are not equispaced are as follows:- $(N-1)$ multiplications are required to calculate the values $s_i$, $N$ to calculate the areas $A_i$, $2(M+1)(M+2)$ to obtain the transform components $F_0$ to $F_m$ inclusive and $\frac{1}{2}(M+1)(M+2)$ to implement the matrix equation (4) to obtain the coefficients $c_0, c_1, \ldots, c_M$ of the polynomial - a total of $2N-1 + 5/2(M+1)(M+2)$ multiplications. For equispaced data the total number of multiplications and divisions required to obtain the coefficients of an $M^{\text{th}}$ order fitted polynomial is $N+\frac{1}{2}(M+1)(5M+12)$ - a saving in computational effort provided $N>M+2$.

It has been shown that the Gradiometer Transform is ~ 95% more efficient (in terms of the total number of multiplications and divisions required) at fitting a given order polynomial to data than standard polynomial fitting techniques [7]. However, it is not necessary to calculate all the transform components $F_0, F_1, \ldots, F_M$ when the transform is used to simultaneously fit a high order ($t^M$) polynomial and filter a low order ($t^p$) polynomial. This can be seen as follows.

If the coefficients of an $M^{th}$ order polynomial fit are $d_0, d_1, \ldots, d_M$ and the coefficients of a $p^{th}$ order fit are $d_0', d_1', \ldots, d_p'$, then it follows from (3) that

$$\left[ d_0 \ d_1 \ \ldots \ d_M \right]^T = J_{(M)}^{-1} \left[ F_0 \ F_1 \ \ldots \ F_M \right]^T$$

and

$$[ d_0' \ d_1' \ \ldots \ d_p' ]^T = J_p^{-1} \left[ F_0 \ F_1 \ \ldots \ F_p \right]^T$$

where $J_{(M)}^{-1}$ and $J_{(p)}^{-1}$ are the $(M+1) \times (M+1)$ and $(p+1) \times (p+1)$ submatrices of $J^{-1}$ respectively. This second equation can be written as

$$[ d_0' \ .. \ d_p' \ 0 \ .. \ 0 ]^T = J_{(M)}^{-1} \ [ F_0 \ .. \ F_p \ 0 \ .. \ 0 ]^T$$

from which it can be seen that

$$[ c_0 \ c_1 \ \ldots \ c_M ]^T = [ d_0 - d_0' \ .. \ d_p - d_p' \ d_{p+1} \ .. \ d_M ]^T = J_{(M)}^{-1} \ [ 0 \ .. \ 0 \ F_{p+1} \ .. \ F_M ]^T$$

where $c_0, c_1, \ldots, c_M$ are precisely the coefficients of that polynomial which is obtained by simultaneously fitting an $M^{th}$ order and removing a $p^{th}$ order polynomial, so that in this case only the transform components $F_{p+1}, \ldots, F_M$ are required. The product $J_{(M)}^{-1} [0, .., 0, F_{p+1}, .., F_M]^T$ can be calculated using only $\frac{1}{2}(M-p)(M+p+3)$ multiplications.

In summary, the simultaneous fitting of an $N^{th}$ order polynomial and removal of a $p^{th}$ order polynomial can be achieved by filtering in transform space - the first $p+1$ transform components are set to zero before taking the inverse transform (3). The total number of multiplications and divisions required in the case when data are not equispaced is $2N-1+{}^5\!/_2(M-p)(M+p+3)$, which can be reduced to $N+\frac{1}{2}(M-p)(M+p+3)$ for equispaced data.

**References**

1. Regan and Regan, Fundamentals of electrophysiology, Elsevier (1980).

2. H.Weinstock, A review of SQUID magnetometry applied to non-destructive evaluation, IEEE Trans. Magnetics, MAG 27, 3231 (1991)

3. T.R.Clune, Intelligent Instruments and Computers 7, 103 (1989)

4. K.G.Beauchamp, Walsh Transforms and their applications, Academic Press, London, (1975)

5. Wavelets.(J.M.Combes, A.Grossmann, Ph.Tchamitchian Eds.), Springer-Verlag, 1989.

6. P.J.Maccabee, N.F.Hassan, Muscle & Nerve, 15, 865 (1992)

7. R.J.P.Bain, A.E.Jones, Gradiometer transforms for elimination of polynomial-like background drift. submitted to IEEE Trans. on Signal Processing.

8. A.E.Jones, R.J.P.Bain, A generalisation of planar magnetic gradiometer design via orthogonal polynomials, J.Comp.Phys 118,191-199 (1995).

9. I.S.Gradshteyn, I.M.Ryzhik (1980), Table of integrals, series and products, Academic Press, New York.

10. C.V.Durrell, A.Robson, *Advanced Algebra* Vol.2, (G.Bell and Sons, London, 1958) p.302.

11. M.Abramowitz, I.A.Stegun, *Handbook of Mathematical Functions*, (Dover, New York, 1970) p.775.

12. A.Quinn, A.Weir, U.Shahani, R.J.P.Bain, P.Maas, G.Donaldson, Brit. J. Obstet. Gynaecol 101 886 (1994)

13. A.Cochran, G.B.Donaldson, S.Evanson, R.J.P.Bain, IEEE Proc. A, 140 113 (1993)

# TABLE I

| | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 1 | $-\frac{1}{2}$ | 0 | $-\frac{2}{3}$ | 0 | $\frac{2}{5}$ | 0 | $-\frac{4}{7}$ | 0 | $\frac{2}{3}$ | 0 | $-\frac{6}{11}$ | 0 | $\frac{6}{13}$ | 0 | $-\frac{8}{15}$ |
| 2 | 0 | -1 | 0 | 2 | 0 | $-\frac{8}{3}$ | 0 | 4 | 0 | $-\frac{24}{5}$ | 0 | $\frac{16}{3}$ | 0 | $-\frac{48}{7}$ | 0 |
| 3 | 0 | 0 | 2 | 0 | -6 | 0 | 12 | 0 | $-\frac{62}{3}$ | 0 | 30 | 0 | -42 | 0 | $\frac{288}{5}$ |
| 4 | 0 | 0 | 0 | -4 | 0 | 16 | 0 | -40 | 0 | 80 | 0 | $-\frac{416}{3}$ | 0 | 224 | 0 |
| 5 | 0 | 0 | 0 | 0 | 8 | 0 | -40 | 0 | 120 | 0 | -280 | 0 | 560 | 0 | $-\frac{3032}{3}$ |
| 6 | 0 | 0 | 0 | 0 | 0 | -16 | 0 | 96 | 0 | -336 | 0 | 896 | 0 | -2016 | 0 |
| 7 | 0 | 0 | 0 | 0 | 0 | 0 | 32 | 0 | -224 | 0 | 896 | 0 | -2688 | 0 | 6720 |
| 8 | 0 | 0 | 0 | 0 | 0 | 0 | 0 | -64 | 0 | 512 | 0 | -2304 | 0 | 7680 | 0 |
| 9 | 0 | 0 | 0 | 0 | 0 | 0 | 0 | 0 | 128 | 0 | -1152 | 0 | 5760 | 0 | -21120 |
| 10 | 0 | 0 | 0 | 0 | 0 | 0 | 0 | 0 | 0 | -256 | 0 | 2560 | 0 | -14080 | 0 |
| 11 | 0 | 0 | 0 | 0 | 0 | 0 | 0 | 0 | 0 | 0 | 512 | 0 | -5632 | 0 | 33792 |
| 12 | 0 | 0 | 0 | 0 | 0 | 0 | 0 | 0 | 0 | 0 | 0 | -1024 | 0 | 12288 | 0 |
| 13 | 0 | 0 | 0 | 0 | 0 | 0 | 0 | 0 | 0 | 0 | 0 | 0 | 2048 | 0 | -26624 |
| 14 | 0 | 0 | 0 | 0 | 0 | 0 | 0 | 0 | 0 | 0 | 0 | 0 | 0 | -4096 | 0 |
| 15 | 0 | 0 | 0 | 0 | 0 | 0 | 0 | 0 | 0 | 0 | 0 | 0 | 0 | 0 | 8192 |

TABLE II

| True location | Estimated location of maxima and minima | | |
|---|---|---|---|
| | a = 0.5 | a = 1 | a = 2 |
| -0.6000 | -0.5978 | -0.5974 | -0.5965 |
| -0.4925 | -0.4928 | -0.4905 | -0.4835 |
| -0.3091 | -0.3061 | -0.2888 | -0.3356 |
| -0.1000 | -0.0829 | -0.0878 | -0.0916 |
| 0.2000 | 0.2015 | 0.1968 | 0.1880 |
| 0.5500 | 0.5611 | 0.5614 | 0.5620 |

## Claims

1. A data processing method comprising generating a plurality of components of a gradiometer transform by correlating a normalised data-set with a plurality of gradiometer step functions of differing orders.

2. A method as claimed in Claim 1, wherein said step functions are selected to successively eliminate components of a Taylor expansion of said data-set.

3. A method as claimed in Claim 1 or Claim 2, wherein said data-set comprises sampled data and said correlation of the data-set with said step functions is performed using a modified data set in which each data sample is replaced by a piecewise continuous rectangular step function.

4. A method as claimed in any one of Claims 1 to 3, wherein the components of the gradiometer transform can be used to obtain useful information regarding the data-set, such as information regarding the background drift of a time-varying signal.

5. A method as claimed in any preceding Claim, including a subsequent step of calculating a plurality of coefficients of at least one polynomial representing said data-set.

6. A method as claimed in Claim 5, wherein coefficients of a plurality of polynomials of differing orders are calculated.

7. A method as claimed in Claim 5 or Claim 6, wherein said coefficients are calculated using a table of values specific to said step functions which can be used to operate on said transform components to obtain said coefficients.

8. A method as claimed in Claim 7, wherein said table of values is calculated in advance and stored as a look-up table for use in the execution of the method.

9. A method as claimed in any one of Claims 5 to 8, wherein said polynomials are fitted to said data-set and the fitted polynomials are subtracted from the data-set.

10. A method as claimed in any preceding Claim, wherein the data-set comprises a signal and the method is employed to remove background drift from said signal.

11. Data processing apparatus comprising data processing means for applying the method in accordance with any one of Claims 1 to 10 to a data-set from a data source.

12. Apparatus as claimed in Claim 11, wherein said apparatus includes output means for generating an output data-set resulting from the application of said method.

13. Apparatus as claimed in Claim 11 or Claim 12, wherein the apparatus includes input means for generating an input signal in response to variations in a parameter to be monitored by the apparatus.

**14.** Apparatus as claimed in Claim 13, wherein the apparatus includes sampling means for dividing said signal into discrete samples.

**15.** Apparatus as claimed in any one of Claims 11 to 14, wherein the data-processing means comprises a suitably programmed computer.

**16.** Apparatus as claimed in any one of Claims 11 to 14, wherein the data-processing means comprises a dedicated unit in which the method is implemented by means of a program encoded in hardware or firmware.

**17.** Apparatus as claimed in any one of Claims 11 to 16, wherein the data-source is a sensor for monitoring a physical parameter.

**18.** Apparatus as claimed in any one of Claims 11 to 16, wherein the data-source is a store of previously obtained or synthesised data.

FIG. 1

FIG. 2

FIG. 3

Fig. 4

24

FIG. 5

FIG.6

FIG. 7

to SQUID

SQUID

+

−

+

Z

Y

X

$\vec{S}$

$\vec{S}$

FIG. 8(a)

FIG. 8(b)

A          B          C    D

H          G          F    E

−1         $x_2$        $x_1$  1    X

FIG. 9

Figure10

Figure11